# EUROPEAN PATENT SPECIFICATION

(11) **EP 0 431 085 B1**
(45) Date of publication and mention of the grant of the patent: **01.02.1995**
(21) Application number: 90905855.4
(22) Date of filing: 03.04.1990
(51) Int. Cl.: E02D 3/00, C23G 1/02

(54) **METHOD OF DECONTAMINATING EARTH**
VERFAHREN ZUR DEKONTAMINIERUNG VON BODEN
METHODE POUR LA DECONTAMINATION DE LA TERRE

(30) Priority: 03.04.1989 US 332147; 22.06.1989 US 369897; 03.11.1989 US 431114; 26.02.1990 US 484970; 09.03.1990 US 490886; 14.03.1990 US 493180
(43) Date of publication of application: 12.06.1991
(60) Divisional application: 94202217.9
(73) Proprietor: MOBIL OIL CORPORATION, New York New York 10017 (US)
(72) Inventor: MORRIS, Richard, L., Duncanville, TX 75116 (US); PAUL, James, Mark, DeSoto, TX 75115 (US); WILSON, Peggy, Mayfield, Dallas, TX 75237 (US)
(74) Representative: Colmer, Stephen Gary
(86) International application number: US9001775
(87) International publication number: WO9012159

(56) References cited:
- US-A- 2 877 848
- US-A- 3 660 287
- US-A- 3 684 720
- US-A- 3 908 387
- US-A- 3 951 827
- US-A- 4 190 462
- US-A- 4 215 000
- US-A- 4 276 185
- US-A- 4 288 333
- US-A- 4 465 402
- US-A- 4 708 805
- US-A- 4 842 448

## Description

This invention relates to a method of decontaminating earth. Natural gas is a major and attractive energy source in the United States and other countries which is distributed on a wide scale by means of pipelines to the ultimate users. The composition of natural gas at the wellhead varies widely from field to field and many components may need to be removed by processing before delivery to the pipeline, as noted in Encyclopedia of Chemical Technology, Kirk-Othmer, Third Edition, Vol. 1, pp. 630-652, John Wiley & Sons, New York, 1978. Condensate must be removed from wet gas, both to eliminate the possibility of condensation in the pipeline itself and to separate these components as another marketable product. Water vapor must also be removed to preclude the formation of gas hydrate and hydrogen sulfide is removed because of its poisonous and corrosive characteristics. Other components such as carbon dioxide and helium may also require removal if they are present.

A number of different processing techniques have been developed for the removal of specific contaminants in the gas and depending upon the composition of the wellhead gas, one or more of the specific processing techniques may be employed at any given gas production site. Water, for example, is generally removed either by absorption in a hydroscopic liquid or adsorption on an activated solid dessicant. Acid gases such as carbon dioxide, hydrogen sulfide and other sulfur compounds may be removed by processes such as the Sulfinol and Selexol processes or by alkali scrubbing, normally using an organic scrubbing agent such as monoethanolamine, diethanolamine or triethanolamine. Natural gas liquids may be recovered by oil absorption or, more recently, by the cryogenic turboexpander process.

Regardless of the specific processing sequence used to condition the gas for pipelining, it is normally passed through a number of items of process equipment prior to removal of the water which generally is present in all wellhead gas. Conventionally, the gas will pass through filters to remove entrained solid contaminants as well as compressors and other items of process equipment employed in the purification train. One problem which is encountered with these items of equipment which precede the water removal is that mineral species and other contaminants from the producing formations may be dissolved in or entrained with the water and may contaminate the equipment with which it comes into contact. Among the contaminants of this kind are dissolved salts including, especially, mineral species of low solubility which may deposit as scale on the filters and other surface equipment. Among the minerals of this kind which cause a particular problem are the sulfates of the alkaline earth metals, including, in particular, calcium, strontium and barium.

Many subterranean waters contain alkaline earth metal cations, such as barium, strontium, calcium and magnesium, and anions, such as sulfate, bicarbonate, carbonate, phosphate, and fluoride. When combinations of these anions and cations are present in concentrations which exceed the solubility product of the various species which may be formed, precipitates form until the respective solubility products are no longer exceeded. For example, when the concentrations of the barium and sulfate ions exceed the solubility product of barium sulfate, a solid phase of barium sulfate will form as a precipitate. Solubility products are exceeded for various reasons, such as evaporation of the water phase, change in pH, pressure or temperature and the introduction of additional ions which can form insoluble compounds with the ions already present in the solution.

As these reaction products or mineral species precipitate on the surfaces of the water-carrying or water-containing system, they form adherent deposits or scale. Scale may prevent effective heat transfer, interfere with fluid flow, facilitate corrosive processes, or harbor bacteria. Scale is an expensive problem in many industrial water systems, in production systems for oil and gas, in pulp and paper mill systems, and in other systems, causing delays and shutdowns for cleaning and removal.

The scale deposits from the sulfates of the alkaline earth matals, including barium and strontium sulfate scale deposits present a unique and particularly intractable problem. Under most condition, these sulfates are considerably less soluble in all solvents than any of the other commonly encountered scale-forming compounds, as shown by the comparative solubilities given in Table 1 below.

**Table 1**

| Comparative Solubilities, 25°C in Water. | |
|---|---|
| Scale | Solubility, mg./l. |
| Gypsum | 2080.0 |
| Strontium sulfate | 140.0 |
| Calcium Carbonate | 14.0 |
| Barium sulfate | 2.3 |

It is generally acknowledged that barium sulfate scale is extremely difficult to remove chemically, especially within reasonably short periods of time: the solvents which have been found to work generally take a long time to reach an equilibrium concentration of dissolved barium sulfate, which itself is usually of a relatively low order. Consequently, barium sulfate must be removed mechanically or the equipment, e.g.pipes, etc., containing the deposit must be discarded.

Another problem associated with the formation of barium and strontium sulfate scales is that radium, another member of the alkaline earth group of metals, tends to be deposited at the same time in the form of an insoluble sulfate so that the equipment becomes radioactive, and may eventually become unusable for safety reasons alone. At present a considerable amount of oilfield tubular goods are in this condition and cannot be readily restrored to usable condition because of the difficulty of removing the radioactive scale. The principal isotopes of radium which have been identified in these scale deposits are radium-226 and radium-228, with half-lives of 1660 years and about 5.8 years, respectively, so that there is considerable potential hazard if they are allowed to remain on the equipment. Radioisotopes of metals such as thallium and thorium e.g. thallium-208, thorium-232 and other radioactive isotopes - frequently formed by the decay of uranium - may also be deposited with the radium with the same result. This problem is encountered with gas processing equipment where the filters and dehydration media, including screens, sorbent beds and media e.g. silica, charcoal or alumina may become quite radioactive with extended use. Since these radioactive elements are embedded in the scale which itself can be removed only with difficulty, the decontamination of the equipment and material is a substantial problem.

The incidence of barium sulfate scale is worldwide, and it occurs principally in systems handling subsurface waters. Because of this, the barium sulfate scale problem is of particular concern to the petroleum industry as water is generally produced with petroleum and as time goes on, more petroleum is produced by the waterflooding method of secondary recovery, implying even greater volumes of produced water. The scale may occur in many different places, including production tubing, well bore perforation, the area near the well bore, gathering lines, meters, valves and in other production equipment. Barium sulfate scale may also form within subterranean formations such as in disposal wells. Scales and deposits can be formed to such an extent that the permeability of the formation is impaired resulting in lower flow rates, higher pump pressures, and ultimately abandonment of the well.

Barium sulfate scale is particularly troublesome when sulphate-rich seawater is used as an injection fluid in oil wells whose formation water is rich in barium ions. This particular aspect of the barium scale problem is severe in some U.S. oil fields as well as some older North Sea oil fields. Scaling of this nature is also expected to occur during advanced production stages in other North Sea fields particularly after seawater breakthrough has taken place.

Various proposals have been made in the past for the removal of barium sulfate scales using chemical scale removal compositions. Examples of such scale removal techniques are to be found in US-A-2,877,848; US-A-3,660,287; US-A-4,708,805; US-A-4,190,462; US-A-4,215,000 and US-A-4,288,333. The proposals set out in these dislosures represent, however, only partial or unsatisfactory solutions to the scale removal problem.

EP-A-418374 (WO-A-9011972) discloses highly effective chemical scale removal compositions which may be used for removing alkaline earth sulfate scales from oil field equipment including tubular goods such as pipe, casing, and wellhead equipment such as meters, valves and above-ground piping. Reference is made to this application for disclosure of these scale removal compositions and the methods by which they may be used.

In US-A-3684720 there is disclosed a method of removing scale from surfaces such as piping and other equipment by treating the scale with a solution containing a scale converting agent and a chelating agent.

Although a principal problem area is with the deposition of these scale materials on oilfield equipment, there is a related problem which is that the earth around the equipment may become contaminated with these scale materials together with any associated radioactive components, if the subsurface waters are allied to spill out onto the surface of the earth during normal operation. This may occur, for example, if subsurface waters are brought to the surface during drilling or production and stored in ponds from which they can seep into the surrounding earth layers. Another source of contamination of this kind is when attempts are made to remove scale from equipment by the use of various chemical scale removal solvents which are allowed to spill onto the surface of the earth and then to seep into it. In either case, the alkaline earth metal sulfates and any other potential scale-forming materials enter the earth layers near the surface and form insoluble precipitates in these layers of the earth. Because these precipitates may also contain radium, the earth formations into which the subterranean waters enter may be subject to contamination with these radio active scale deposits when, as is usually the case, the conditions are appropriate for precipitation of the scale. In particular, if the subterranean waters are permitted to flood onto the surface of the earth, the surface earth and closely adjacent levels of the earth may become contaminated with the radioactive deposit and after a period of time may become undesirably radioactive, with a relatively high level of background radiation.

Clearly, it is desirable to return surface formations of the earth to a condition where background radiation is reduced to a low level and also to remove insoluble materials such as alkaline earth metal scale which may have been deposited by invasion of top surface waters. The present invention provides an effective means for this to be done.

According one aspect of the present invention, deposits of water insoluble alkaline earth metal sulfates, which may include radioactive contaminants such as radium sulfate, are removed from the earth by the use of a chemical composition which includes a chelant (chelating agent) in combination with a catalyst or synergist which increases the solubility of the alkaline earth metal sulfates in aqueous solution. The preferred catalyst or synergist is the oxalate anion, by other synergists may also be used including the monocarboxylate anion, the thiosulfate anion, or the nitriloacetic acid anion, as described in EP-A-418374 referred to above.

The earth around the oil field production equipment including wellheads, mud ponds, tubing stacks or any other place exposed to scaled equipment or the invasion of produced subsurface waters may be decontaminated by leaching the naturally occuring radioactive material (NORM) and scale from the earth and permitting the leachate to percolate into a secure, subterranean layer of the earth. Alternatively, the soil may be removed from around the equipment and the scale and NORM leached out in a tank. The leached soil can than be returned approximately to its former location, thereby avoiding the expense of removing the offending surface soil to a hazardous waste disposal site with the resultant transport and disposal expenses. In this case, the leachate may be recovered and treated by normal chemical methods is the radioactive material is wanted or, if not, the leachate may be returned to the subterranean formation form which the alkaline earth metal scale and NORM derived. In this way, the contaminating material is returned to its original situs deep in the earth where it presents no danger.

The chelant may, for example, be selected from aminocarboxylic acids, polyaminocarboxylic acids, polyamines, salts and mixtures thereof. The synergist may be selected from anions or organic or inorganic acids, and mixtures thereof, having an ionization constant of less than substantially 10⁻² (Ka <10⁻²).

Reference is now made to the accompanying drawings which show in simplified form, a section of the earth with oil field production equipment in place through various subterranean formations.

The surface earth formations which may be treated according to the first aspect of the present invention are usually those areas of the earth's surface and in the immediately adjacent subsurface layers which surround boreholes extending from the surface of the earth into subterranean formations where subsurface waters containing alkaline earth cations are found. Generally, boreholes of this type are used or the production of petroleum, natural gas and other minerals e.g. sulfur. During the drilling, completion or production phases of the life of the well, greater or lesser quantities of these subsurface waters may be brought to the surface of the earth where they will contaminate the equipment and the surface layers of the earth if they are not rigorously contained. Since the level of contamination is usually fairly small, rigorous containment has often not been applied in the past, by constant invasion of the surface layers by such waters may, over extended periods of time, result in an undesirable accumulation of NORM as well as the less harmful materials with similar chemistry. Accumulation of the NORM and scale may also occur around field equipment including tubing stacks or anywhere that scale equipment has been handled, particularly where scale has been removed using either known scale removal compositions or the highly effective scale remove compositions disclosed in EP-A-418374 referred to above.

According to the first aspect of the present invention, the scale and NORM deposits are removed from the surface earth layers by leaching with a scale removal composition. The removal process may be carried out with the surface earth layer remaining undisturbed at its original situs or, alternatively, by removal of the earth to a tank or pond (with an impervious liner such as clay or plastic sheeting) in which the contaminants are removed using the aqueous composition. After the scale and NORM have been leached out from the earth, the decontaminated earth is brought back more or less to its original site and replaced. Methods for decontamination of surface earth layers in this manner are comparable to those which have been used for the removal of uranium from surface earth formations in areas of the Southwestern United States, including Texas and New Mexico.

If the contaminants are leached from the earth while it remains at its original situs, the character of the subsurface layers and formations should be ascertained in order to ensure that the leaching solution together with the leached-out contaminants does not enter any subsurface aquifers or other formations which should be maintained in a pristine condition. Thus, aquifers should be protected by an overlying impervious layer e.g. of clay or another impervious stratum. If this option is not, however, available, it may be necessary to resort to the earth removal technique referred to above, with the leachate solution containing the radioactive contaminants being treated separately to remove the contaminants e.g. by ion exhange over a cationic exchange resin or by disposal of the leachate solution in the original layer of the earth from which the contaminants were derived. This represents a preferred alternative since the offending materials are simply returned to their original place in the earth where they are largely innocuous.

The alkaline earth metal scales, especially barium and strontium sulfate scales and associated naturally occurring radioactive material (NORM) are removed from the earth around oil field production equipment using an aqueous scale removal composition which comprises a chelating agent or chelant in combination with a catalyst or synergist. Suitable aqueous solvents or compositions of this type are disclosed in the related patent application EP-A-418374 described above to which reference is made for a description of suitable aqueous solvent positions which may be used for the removal of alkaline earth sulfate scales and NORM from surface earth formations according to the methods disclosed in this present specification. Any of the scale removal compositions disclosed in the related application identified above, together with other suitable compositions having the same or similar effect may be used in the present techniques and will be more or less preferred according to their effectiveness. We prefer to use the oxalate containing compositions, since these have been found to give fast rates of sulfate scale dissolution and are able to take up a high level of sulfate scale into solution so that they represent a particularly favored method of decontaminating surface earth formations. The monocarboxylic acid anion synergists especially the salicylate anion, have also been found to give good results, so that these too constitute a preferred class of synergists. The thiosulfate and nitriloacetate synergists are also capable of improving the dissolution of the scale relative to that of the chelant without the synergist.

The aqueous solvent composition which is used to remove the scale material from the earth comprises a polyaminopolycarboxylic acid such as ethylenediaminetetraacetic acid (EDTA) or diethylenetriaminepentaacetic acid (DTPA) as a chelant or chelating agent which is intended to form a stable complex with the cation of the alkaline earth scale-forming material. Of these chelants, DTPA is the preferred species since it forms the most soluble complexes at greatest reaction rate. EDTA may be used but is somewhat less favorable and, as noted below, may be less responsive to the addition of the catalyst or synergist. The chelant may be added to the solvent in the acid form or, alternatively, as a salt of the acid, preferably the potassium salt. In any event the alkaline conditions used in the scale removal process will convert the free acid to the salt

The concentration of the chelant in the solvent should normally be at least 0.1M in order to achieve acceptable degree of scale removal. Chelant concentrations in excess of 1.0 M are usually not necessary and concentrations from about 0.3M up to about 0.6M will normally give good results; although higher concentrations of chelant may be used, there is generally no advantage to doing so because the efficiency of the chelant utilisation will be lower at excess chelant concentrations This economic penalty is particularly notable in oilfield operations where large volumes of solvent may be used, especially in formation scale removal treatment.

In addition to the chelant, the present scale removal compositions contain a catalyst or synergist for the dissolution of the scale. The synergist is preferably the oxalate anion; a monocarboxylic anion such as mercaptoacetate, hydroxyacetate or aminoacetate or an aromatic acid, preferably salicylate; or thiosulfate; or nitriloacetate. Generally these anions are added as salts or the free acid, depending on the stability and availability of the chosen synergist. In either case, however, the relatively alkaline conditions under which the process is operated, will result in the acid, if used, being converted to the salt form. The potassium salts are preferred in view of their greater solubility and for this reason, the solvent should preferably be brought to the desired pH value with a potassium base, preferably potassium hydroxide.

The concentration of the catalyst or synergist in the aqueous solvent will be of a similar order to that of the chelant: thus, the amount of the synergist anion in the solvent should normally be at least 0.1M in order to achieve a perceptible increase in the efficiency of the scale removal, and concentrations from about 0.3M up to about 0.6M will give good results. Although higher concentrations of the synergist e.g. above 1.0 M may be used, there is generally no advantage to doing so because the efficiency of the process will be lower at excess catalyst concentrations. Again, this economic penalty is particularly notable in oilfield operations.

The scale removal is effected under alkaline conditions preferably at pH values of from about 8.0 to about 14.0, with optimum values being from about 10 or 11 to 13, preferably about 12. As noted above, the use of caustic potash is preferred to bring the composition to the desired pH since the potassium salts formed by its use are more soluble than the corresponding sodium salts.

The preferred solvents comprise about 0.1 to about 1.0 M of ethylenediaminetetraacetic acid (EDTA) or diethylenetriaminepentaacetic acid (DTPA), or salts or these acids, as a chelant. In addition, the chosen anionic catalyst or synergist is added to the aqueous solution in about 0.01 to about 1.0, preferably about 0.1M to 0.5 M, concentration. The pH of the solvent is then adjusted by the addition of a base, preferably potassium hydroxide, to the desired value, preferably to about pH 12. We have found that it is important to avoid the use of sodium cations when operating at high pH values, above pH 8, and instead, to use potassium or, alternatively, cesium as the cation of the scale-removing agent. Potassium is preferred for economy as well as availability. Thus, the normal course of making up the solvent will be to dissolve the chelant and the potassium salt of the selected synergist in the water to the desired concentration, after which a potassium base, usually potassium hydroxide is added to bring the pH to the desired value of about 12.

Prior to contact with the earth, the composition may be heated to a temperature between about 25°C to about 100°C., in order to improve the extraction of the insoluble mineral salts, if it is readily feasible to do so. Operation in a tank or vessel may be preferred for this reason. If it is possible to control the contact time between the earth and the composition e.g. by operation in a tank, the composition is allowed to remain there for about ten minutes to about 7 hours; after remaining in contact with the equipment for the desired time, the composition containing the dissolved scale may be drained off from the earth and recovered for optional removal of the dissolved scale species.

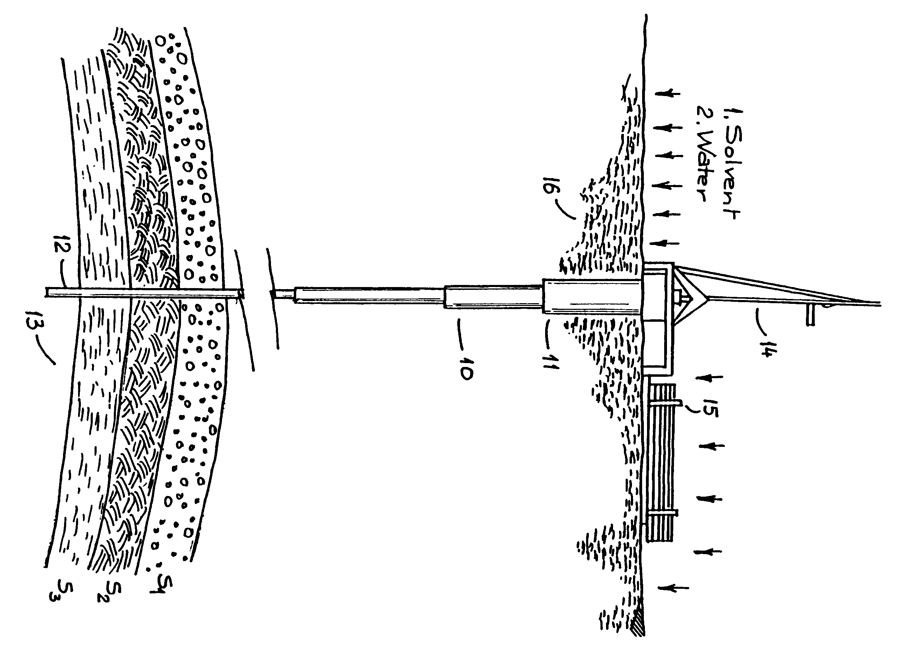

The Figure shows a simplified section of the earth with an oil well extending down through the layers of the earth to a production interval from which the oil is produced. The well 10 extends through surface conductor pipe 11 and is cased through successive layers of the earth with casing of progressively decrease diameter 12 to completion in production interval 13. The borehole extends through various subsurface strata S₁, S₂ and S₃, indicated conventionally in the Figure. During drilling and completion of the well, surface equipment such as drilling mast 14 with its associated equipment such as turntable, blowout preventer and pipe handling equipment, is situated on the surface of the earth with drill pipe and tubular goods being located conveniently for installation, for example, the pipe located in pipestack 15. If subsurface waters are brought to the surface through the well during drilling completion or production and are permitted to accumulate on the earth's surface, e.g. in an unlined mud pond, precipitates of the insoluble sulfate scale materials including radium may accumulate in the surface layer of the earth 16 around the well with the undesirable results referred to above.

The contaminants may be removed by first applying to the surface of the earth an aqueous chemical scale removal composition of the type referred to above in order to convert the insoluble alkaline earth metal sulfate precipitates to a form in which they are soluble in water. The solubilized precipitates are then leached from the surface layers of the earth use additional water which is permitted to percolate into a lower level where the presence of the removed metals may be tolerated. The chemical composition may be applied by means of sprayers or hoses or other suitable applicators; the water may be applied in a similar manner using the same equipment if the natural rainfall at the site is sporadic or sparse. The earth surrounding the wellhead may then be returned to productive use, including use for agriculture, without any potential harmful effect. As noted above, any aquifers should be protected by an overlying impervious layer in order to prevent contamination of the aquifer.

If the earth is decontaminated by the removal technique, the use of two separate treatment liquids, i.e. the solvent followed by water, is not necessary and it is possible to utilize one treatment only, using the aqueous, chemical solvent which converts the sulfate precipitates to soluble form and dissolves them in the solvent itself. In the in-situ method, the use of the additional water leach is preferred in order to ensure effective removal of the precipitates with the minimum amount of solvent.

Mineral deposits or scale derived from subterranean waters form on natural gas handing equipment and media such as pipework, tubing, pumps, filters, screens, and sorption media such as charcoal, silica, alumina beds, as the gas passes through them and the water evaporates or is removed in the processing. The scale deposits frequently include radioactive components, especially the insoluble sulfate of radium, an alkaline earth metal, and of related metals, including thorium and thallium. The scale deposits usually include additional mineral components, for example, the sulfates of the other metals of the alkaline earth group, especially calcium, strontium and barium, which are of low solubility in conventional solvents, as described above. Once they are formed, these scale deposits cannot be readily removed by conventional means since they are both adherent and insoluble to the conventional solvents. Thus, they cannot be readily removed by washing or other simple remedies. The deposits therefore accumulate progressively on the equipment and because many of them are radioactive because of the presence of the radioactive species, increase the activity of the equipment over a period of time until it may no longer be acceptable according to the relevant regulatory standards.

According to the second aspect of the present invention, deposits of scale on gas handling equipment and media which include water insoluble alkaline earth metal sulfates including radioactive contaminants such as radium sulfate, are removed by the use of a chemical composition which includes a chelant (chelating agent) in combination with a catalyst or synergist which increases the solubility of the alkaline earth metal sulfates in aqueous solution. The preferred catalyst or synergist is the oxalate anion, but other synergists may also be used including the mono-carboxylate acid anion and the thiosulfate or nitriloacetic acid anions, as disclosed in EP-A-418374 referred to above. Reference is made to this application for a description of suitable aqueous solvent compositions which may be used for the removal of these scale deposits according to the methods disclosed in this present application. Any of the scale removal compositions disclosed in the related application identified above, together with other suitable compositions having the same or similar effect may be used in the present techniques and will be more or less preferred according to their effectiveness.

The aqueous solvent composition which is used to remove the scale material from the equipment comprises a polyaminopolycarboxylic acid such as ethylenediaminetetraacetic acid (EDTA) or diethylenetriaminepentaacetic acid (DTPA) as a chelant or chelating agent which is intended to form a stable complex with the cation of the alkaline earth scale-forming material. Of these chelants, DTPA is the preferred species since it forms the most soluble complexes at greatest reaction rate. EDTA may be used but is somewhat less favorable and, as noted below, may be less responsive to the addition of the catalyst or synergist. The chelant may be added to the solvent in the acid form or, alternatively, as a salt of the acid, preferably the potassium salt. In any event the alkaline conditions used in the scale removal process will convert the free acid to the salt.

The concentration of the chelant in the solvent should normally be at least 0.1M in order to achieve acceptable degree of scale removal. Chelant concentrations in excess of 1.0 M are usually not necessary and concentrations from about 0.3M up to about 0.6M will normally give good results; although higher concentrations of chelant may be used, there is generally no advantage to doing so because the efficiency of the chelant utilisation will be lower at excess chelant concentrations.

In addition to the chelant, the scale removal compositions contain a catalyst or synergist for the dissolution of the scale. As described above, the synergist is preferably the oxalate anion; a monocarboxylic anion such as mercaptoacetate, hydroxyacetate or aminoacetate or an aromatic acid, preferably salicylate; or thiosulfate; or nitriloacetate. Generally these anions are added as salts or the free acid, depending on the stability and availability of the chosen synergist. In either case, however, the relatively alkaline conditions under which the process is operated, will result in the acid, if used, being converted to the salt form. The potassium salts are preferred in view of their greater solubility and for this reason, the solvent should preferably be brought to the desired pH value with a potassium base, preferably potassium hydroxide.

The pH of the solvent is adjusted by the addition of a base, preferably potassium hydroxide, to the desired value, permitting scale removal to take place under alkaline conditions preferably at pH values of from about 8.0 to about 14.0, with optimum values being from about 10 to 11 to 13, preferably about 12. As noted above, the use of caustic potash is preferred to bring the composition to the desired pH since the potassium salts formed by its use are are soluble than the corresponding sodium salts: it is important to avoid the use of sodium cations when operating at high pH values, above pH 8, and instead, to use potassium or, alternatively, cesium as the cation of the scale-removing agent. Potassium is preferred for economy as well as availability. Thus, the normal course of making up the solvent will be to dissolve the chelant and the potassium salt of the selected synergist in the water to the desired concentration, after which a potassium base, usually potassium hydroxide is added to bring the pH to the desired value of about 12.

The concentration of the catalyst or synergist in the aqueous solvent will be of a similar order to that of the chelant: thus, the amount of the synergist anion in the solvent should normally be at least 0.1M in order to achieve a perceptible increase in the efficiency of the scale removal, and concentrations from about 0.3M up to about 0.6M will give good results. Although higher concentrations of the synergist e.g. above 1.0 M may be used, there is generally no advantage to doing so because the efficiency of the process will be lower at excess catalyst concentrations. Again, this economic penalty is particularly notable in oilfield operations.

In the preferred scale removal compositions, a polyaminopolycarboxylic acid such as ethylenediaminetetraacetic acid (EDTA) or diethylenetriaminepentaacetic acid (DTPA) is used as the chelant, preferably in an amount of 0.1 to 1.0M as the chelant, typically about 0.5M giving good results. The preferred synergist or catalyst is the oxalate anion, as disclosed above. The oxalate anion is preferably used in an amount of about 0.1 to 1.0M, preferably about 0.5M, with a pH of 10 to 14, preferably 11 to 13, and usually about 12. The desired pH value is obtained by the addition of a base, preferably a potassium base such as caustic potash, potassium hydroxide. If the chelant is added in the form of a salt, the preferred cations for the salt will be potassium since these have been found to give better solubility. An alternative synergist or catalyst is a monocarboxylic acid anion, preferably salicylate. These anions have also been found to give fast rates of sulfate scale dissolution and are able to take up a high level of sulfate scale into solution so that they represent a particularly favored method of decontaminating gas handling equipment and media. The thiosulfate or nitriloacetic acid synergists also described in EP-A-418374 may also be used. The amounts of the chelant and synergist used with the moncarboxylic acid and other synergists are comparable to the amounts used with the oxalate synergists and comparable solution pH values are also used, i.e chelant and synergist concentrations from 0.1 to 1.0M usually about 0.5M, solution pH from 10 to 14, usually 11 to 13 and for best results, about 12.

The scale removal composition may be heated to a temperature between about 25°C to about 100°C. (or higher if superatmospheric pressure can be employed), in order to improve the dissolution of the insoluble scale species in the composition. Contact time between the equipment and the scale-removing composition is typically from about ten minutes to about 7 hours, depending on the tickness of the scale deposits and the temperature, with faster dissolution of the scale being obtained at the higher temperatures. After remaining in contact with the equipment for the desired time, the composition containing the dissolved scale may be drained off and, if desired, recovered for removal of the dissolved scale species.

In the treatment of the equipment and sorption media, the mineral deposits may be removed by washing with the selected solvent. The equipment may, if convenient, be washed with the solvent while still in place or, alternatively, removable items such as filters and minor pieces may be removed and washed with the solvent in a tank. Sorption media such as charcoal, alumina or silica, which are particulate in character, may be slurried with the solution after being unloaded from the sorption vessel or, alternatively, they may be treated in situ in the vessel if the loading of the medium and the mechanical features of the vessel permit this to be done. In either case, contact time will vary according to the thickness of the scale but at treatment temperatures of about 25° to 100° C., the duration of the treatment will normally be about 1 to 6 hours to reduce the radioactivity to acceptable levels. The solvent containing the dissolved scale components may then be treated to recover the dissolved radioactive materials for acceptable disposal methods, for example, by cation exchange onto a suitable cation-exchange resin to bring the radioactive components into solid form.

### Example

Samples were taken of a charcoal gas sorption medium, which had become contaminated with radium-226, thallium-208 and thorium 232. The samples contained these contaminants, accumulated over extended periods of time in gas processing, in amounts which precluded their disposal by normal methods. The activity was 24.9 pCi/g.(picocuries/gram.) for the radium component.

The charcoal samples were slurried with an aqueous solution of 0.5M DTPA (diethylenetriamine pentaacetic acid) and 0.5M oxalic acid brought to pH=12 by the addition of caustic potash (potassium hydroxide). The slurry was held at a temperature of 90-100° C for approximately four hours, after which the charcoal was filtered off and dried. After drying, the activity of the samples was found to be 0.3 pCi/g. (radium-226), low enough to permit disposal of the charcoal by conventional methods.

Another effective chelant is cyclohexanediaminetetraaretic acid (CDTA), which may be used with any of the synergists disclosed hereinabove. DCTA is particularly useful with the oxalate anion at a pH of substantially 13.

## Claims

1. A method of decontaminating earth which has been contaminated with precipitates of alkaline earth metal sulfates, which method comprises (i) converting the precipitated alkaline earth metal sulfates in the earth to soluble form by contacting the sulfate precipitate with an aqueous composition comprising a chelating agent and a synergist (ii) leaching the dissolved alkaline earth precipitate from the earth with water.

2. A method according to claim 1 in which the earth is converted at its original site.

3. A method according to claim 1 in which the earth layer is a surface earth layer contaminated with alkaline earth metal sulfate precipitate derived from a subsurface layer in the earth.

4. A method according to claim 1, 2 or 3 in which the aqueous leachate is percolated into a lower layer of the earth.

5. A method according to claim 1 in which the contaminated earth is removed to a location away from its original site before it is converted.

6. A method according to claim 5 in which the earth is leached in a tank or pond lined with an impervious lining.

7. A method according to claim 5 or 6 in which the earth is separated from the leachate and returned to the approximate site from which it was removed.

8. A method according to any preceding claim in which the precipitates of alkaline earth metal sulfates include radium sulfate.

9. A method according to any preceding claim in which the removal composition comprises polyaminopolycarboxylic acid as the chelating agent and oxalate anion as a synergist.

10. A method according to any of claims 1 to 8 in which the aqueous solution comprises a polyaminopolycarboxylic acid as the chelating agent and a monocarboxylic acid anion as the synergist.

11. A method according to claim 10 in which the monocarboxylic anion is selected from hydroxyacetate, mercaptoacetate and aminoacetate.

12. A method according to claim 10 in which the monocarboxylic acid anion comprises salicylate anion.

13. A method according to any of claims 1 to 8 in which the aqueous solution comprises polyaminopolycarboxylic acid as the chelating agent and a synergist selected from thiosulfate and nitriloacetate anions.

## Patentansprüche

1. Verfahren zum Dekontaminieren von Erde, die mit Niederschlägen aus Erdalkalimetallsulfaten verunreinigt worden ist, wobei das Verfahren (i) das Umwandeln der niedergeschlagenen Erdalkalimetallsulfate in der Erde in eine lösliche Form durch Kontaktieren des Sulfatniederschlags mit einem wäßrigen Mittel, das einen Chelatbildner und einen Synergisten enthält, und (ii) das Auswaschen des gelösten Erdalkalimetallniederschlags aus der Erde mit Wasser umfaßt.

2. Verfahren nach Anspruch 1, in dem die Erde an ihrer ursprünglichen Stelle umgewandelt wird.

3. Verfahren nach Anspruch 1, in dem die Erdschicht eine oberflächliche Erdschicht ist, die mit einem Erdalkalimetallsulfatniederschlag verunreinigt ist, der von einer unter der Oberfläche befindlichen Schicht in der Erde stammt.

4. Verfahren nach Anspruch 1, 2 oder 3, in dem man die wäßrige Waschflüssigkeit in eine tiefere Schicht der Erde eindringen läßt.

5. Verfahren nach Anspruch 1, in dem die verunreinigte Erde an einen Ort gebracht wird, der von der ursprünglichen Stelle der Erde entfernt ist, bevor sie umgewandelt wird.

6. Verfahren nach Anspruch 5, in dem die Erde in einen Behälter oder in einen Teich, der mit einer undurchlässigen Auskleidung versehen ist, ausgewaschen wird.

7. Verfahren nach Anspruch 5 oder 6, in dem die Erde von der Waschflüssigkeit getrennt und etwa zu der Stelle, von der sie entfernt worden war, zurückgebracht wird.

8. Verfahren nach einem der vorstehenden Ansprüche, in dem die Niederschläge der Erdalkalimetallsulfate Radiumsulfat einschließen.

9. Verfahren nach einem der vorstehenden Ansprüche, in dem das Abtrennungsmittel eine Polyaminopolycarbonsäure als den Chelatbildner und Oxalatanionen als einen Synergisten enthält.

10. Verfahren nach einem der Ansprüche 1 bis 8, in dem die wäßrige Lösung eine Polyaminopolycarbonsäure als den Chelatbildner und Monocarbonsäureanionen als den Synergisten enthält.

11. Verfahren nach Anspruch 10, in dem das Monocarbonsäureanion aus Hydroxyacetat, Mercaptoacetat und Aminoacetat ausgewählt wird.

12. Verfahren nach Anspruch 10, in dem das Monocarbonsäureanion das Salicylatanion enthält.

13. Verfahren nach einem der Ansprüche 1 bis 8, in dem die wäßrige Lösung eine Polyaminopolycarbonsäure als den Chelatbildner und einen Synergisten, der aus Thiosulfat- und Nitriloacetatanionen ausgewählt ist, enthält.

## Revendications

1. Un procédé de décontamination de sols qui ont été contaminés par des précipités de sulfates de métaux alcalino-terreux, ce procédé comprenant les étapes suivantes:
(i) conversion de sulfates de métaux alcalino-terreux précipités dans le sol en forme soluble par mise du précipité de sulfate au contact d'une composition aqueuse comprenant un agent chélatant et un agent de synergie,
(ii) lessivage du précipité alcalino-terreux dissous dans la terre à l'aide d'eau.

2. Un procédé selon la revendication 1, dans lequel le sol est converti sur son site original.

3. Un procédé selon la revendication 1, dans lequel la couche de sol est une couche de sol superficielle contaminée par un précipité de sulfate de métal alcalino-terreux provenant d'une couche souterraine du sol.

4. Un procédé selon la revendication 1, 2 ou 3, dans lequel la liqueur de lessivage aqueuse est filtrée à travers une couche inférieure du sol.

5. Un procédé selon la revendication 1, dans lequel le sol contaminé est transporté en un emplacement éloigné de son site original avant qu'il ne soit traité.

6. Un procédé selon la revendication 5, dans lequel le sol est lessivé dans un réservoir ou une marre revêtu d'une doublure imperméable.

7. Un procédé selon la revendication 5 ou 6, dans lequel le sol est séparé de la liqueur de lessivage et restitué au site approximatif dont on l'a retiré.

8. Un procédé selon l'une quelconque des revendications précédentes, dans lequel les précipités de sulfates de métaux alcalino-terreux comprennent du sulfate de radium.

9. Un procédé selon l'une quelconque des revendications précédentes, dans lequel la composition d'élimination comprend de l'acide polyaminopolycarboxylique comme agent chélatant et un anion oxalate comme agent de synergie.

10. Un procédé selon l'une quelconque des revendications 1 à 8, dans lequel la solution aqueuse comprend un acide polyaminopolycarboxylique comme agent chélatant et un anion d'acide monocarboxylique comme agent de synergie.

11. Un procédé selon la revendication 10, dans lequel l'anion monocarboxylique est choisi parmi hydroxyacétate, mercaptoacétate et aminoacétate.

12. Un procédé selon la revendication 10, dans lequel l'anion d'acide monocarboxylique comprend l'anion salicylate.

13. Un procédé selon l'une quelconque des revendications 1 à 8, dans lequel la solution aqueuse comprend de l'acide polyaminopolycarboxylique comme agent chélatant et un agent de synergie choisi parmi les anions thiosulfate et nitriloacétate.
